(19) Europäisches Patentamt / European Patent Office / Office européen des brevets

(11) **EP 3 657 653 A1**

(12) **EUROPEAN PATENT APPLICATION**

(43) Date of publication:
27.05.2020 Bulletin 2020/22

(51) Int Cl.:
*H02M 1/12* (2006.01)    *H02M 7/539* (2006.01)
*H02M 7/493* (2007.01)    *H02M 7/483* (2007.01)

(21) Application number: 18382844.1

(22) Date of filing: 23.11.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ingeteam Power Technology, S.A.**
**48170 Zamudio (Bizkaia) (ES)**

(72) Inventor: **MADARIAGA ZUBIMENDI, Danel**
**48170 Zamudio (ES)**

(74) Representative: **Igartua, Ismael**
**Galbaian S. Coop.**
**Garaia Parke Teknologikoa**
**Goiru Kalea 1**
**20500 Arrasate-Mondragón (ES)**

(54) **MODULATION METHOD FOR AN ELECTRONIC POWER CONVERSION SYSTEM**

(57) Modulation method for a power conversion system (100) with a converter (1) with a plurality of switches (1.3), whereby, taking as a reference an original waveform with certain harmonics which is obtained from specific switching angles applied on the switches (1.3), an output waveform with the required harmonics is obtained. In the method, a harmonic sensitivity matrix is calculated with respect to switching angles of the original waveform and the inverse thereof; and the difference between said harmonics and those required is calculated, said difference is multiplied by the inverse sensitivity matrix, and the sum of said result and the switching angles is applied to the switches of the converter.

Fig. 2

**Description**

TECHNICAL FIELD

The present invention relates to modulation methods for electric power conversion systems.

PRIOR ART

Power conversion systems using at least one electronic power converter are well known. Converters receive DC or AC power and convert it into AC or DC power in a specific manner depending on the application and requirements.

For example, a power converter can be connected to a DC power source at the input and to a power grid at the output. In this case, the converter converts DC power into AC power to supply it to the grid. Furthermore, the conversion can be performed such that, in the resulting output power, a series of harmonics is eliminated or at least mitigated according to grid requirements.

To carry out the conversions and to enable eliminating or at least mitigating a series of harmonics, different modulation techniques consisting of chopping the input voltage signal for obtaining the required output voltage signal are known.

The most widely used modulation technique is the one known as PWM (an acronym for Pulse Width Modulation). A voltage pulse train having a variable width, the mean value of which in each pulse coincides with that of the demanded voltage setpoint, is generated with this technique. PWM has extremely good dynamic response characteristics, but it has the drawback of generating many harmonics at frequencies close to chopping frequencies. There are different variants of PWM (scalar, vector, etc.).

Another modulation technique used in converters is the one known as SHE (an acronym for "Selective Harmonic Elimination"). A pulse train with previously calculated switching angles, with the special characteristic of as many as possible of the harmonics of the resulting waveform being eliminated, is reproduced with this technique. To find the solutions to a SHE problem, a complex system of non-linear equations has to be solved, which is performed offline on a PC, and the solutions are finally inserted in tabulated form in the code of the converter.

A variant of SHE is the one known as SHM (an acronym for "Selective Harmonic Mitigation") which, without going so far as completely eliminating the selected harmonics, is capable of reducing their value. In this case, the advantage lies in the number of mitigated harmonics being larger than the number of harmonics eliminated with SHE, and the drawback lies in the mitigation being only a partial one. The calculation of the edges of the waveform is also performed offline, and the results are saved in a table for subsequent online access, in the same manner as SHE.

All these modulation techniques are limited in terms of the pulses and switching angles to be selected for chopping the input voltage signal (the more the switching angles, the higher the mitigation or elimination capacity), which results in the possible elimination or mitigation of harmonics being limited, even though the result may be acceptable.

US2007242489A1 discloses a method for designing a random pulse width modulation with unwanted harmonic elimination, using in the first place a Fourier analysis and a numerical analysis to eliminate the unwanted harmonic components; then using the equal area approach to produce switching angles that will be used as initial values for solving non-linear equations; then selecting low-order harmonics to be eliminated and randomly sampled harmonics to solve the equations and obtain a plurality of switching angles for eliminating different harmonics; then applying the plurality of harmonics to a random probability function to thereby obtain a harmonic distribution; and finally using a random sampling to evenly disperse the higher side-band harmonics and effectively suppress the low-order harmonics. As a result, specific low-order harmonics are eliminated or reduced, and previously selected high-order harmonics are distributed, high-order harmonics with large values being prevented. However, this solution is effective for previously selected harmonics and for the starting conditions for said harmonics, but it is not suitable when the requirements for the harmonics vary (and even when the harmonics to be compensated vary).

DISCLOSURE OF THE INVENTION

The object of the invention is to provide a modulation method for a power conversion system, as defined in the claims.

The modulation method of the invention is suitable for a power conversion system comprising at least one electronic power converter with a plurality of controllable switches, whereby, taking a specific, original, periodic waveform as a reference, a periodic output waveform with harmonics with required values is obtained.

The original waveform was generated by causing the switching of switches at specific switching angles, an original waveform with harmonics of specific values being obtained as a result.

The method comprises a first phase in which a sensitivity matrix (Jacobian matrix) of the original waveform, representing changes in the values of a plurality of selected harmonics of the original waveform with respect to changes of a plurality of selected switching angles based on which said original waveform was obtained, is calculated. To that end, all the partial derivatives of said harmonics with respect to each of said switching angles are calculated. The inverse of said sensitivity matrix is furthermore calculated in the first phase.

The method further comprises a second phase in which:

- the vector difference between the values corresponding to the harmonics of the original waveform being considered for calculating the sensitivity matrix in the first phase and setpoint values for said harmonics is calculated, a vector of harmonic error being obtained as a result,
- the inverse sensitivity matrix calculated in the first phase is multiplied by the vector of harmonic error, an incremental vector for the switching angles being obtained as a result of said multiplication,
- the corresponding increment of the incremental vector for the switching angles is added to the switching angles being considered for calculating the sensitivity matrix in the first phase, new switching angles being obtained, and
- the switching of switches of the converter at the new switching angles is caused, the required output waveform being obtained.

The output waveform can therefore be optimized with the proposed method depending on the harmonics desired in each moment (in real time), without being limited to previously selected harmonics, as occurs in the prior art, and to requirements previously established for said harmonics, while at the same time overcoming the limitations of conventional modulation methods. Furthermore, this is achieved in a manner that does not require the use of additional elements, so it can even be implemented in conversion systems in use today.

These and other advantages and features of the invention will become evident in view of the drawings and detailed description of the invention.

DESCRIPTION OF THE DRAWINGS

Figure 1 schematically shows a conversion system suitable for supporting the preferred embodiment of the method of the invention.

Figure 2 depicts an example of a comparison between the original switching angles and the new switching angles to be applied as a result of the implementation of the method of the invention, during a quarter wave cycle.

Figure 3 schematically shows a conversion system suitable for supporting other embodiments of the method of the invention.

DETAILED DISCLOSURE OF THE INVENTION

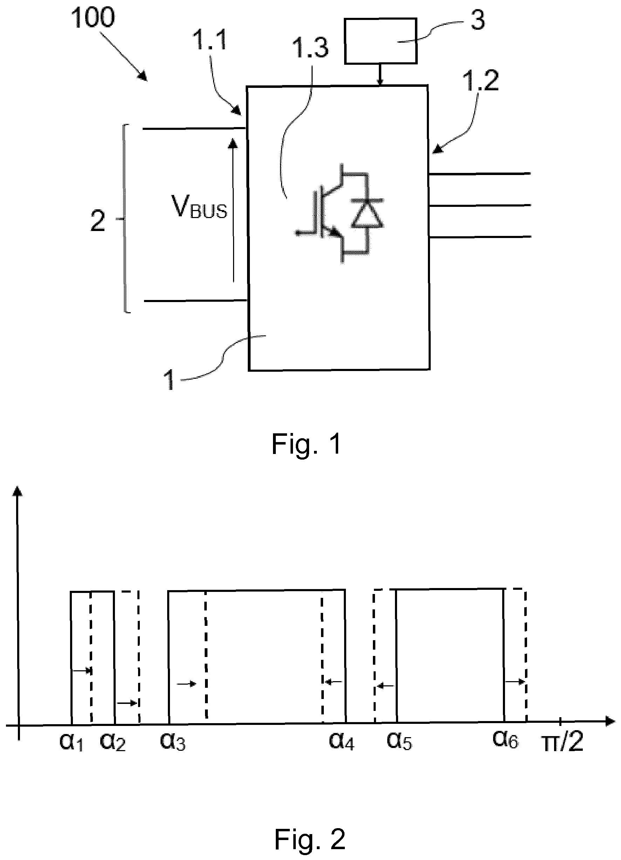

In some embodiments, such as the case of a preferred embodiment, the proposed method is suitable for an electric power conversion system 100 comprising an electronic power converter 1 with a plurality of controllable switches 1.3, such as the one shown by way of example in Figure 1, with controllable being understood as the ability to control the opening and closing (switching) of said switches.

The converter 1 is a DC/AC converter and comprises a DC side 1.1, an AC side 1.2, and a switching block 1.0 whereby both sides 1.1 and 1.2 are connected to one another, the switching block 1.0 comprising the controllable switches 1.3.

The DC side 1.1 of the converter 1 is connected to a DC bus 2, and the DC bus 2 can be connected, for example, to a DC power source or a power grid (through an AC/DC converter, for example). The converter 1 thereby converts DC power of the DC bus 2 into AC power in order to supply it to where it is required (through the AC side 1.2 which will be connected where required for said supply to be carried out). The method is suitable for controlling the switching of switches 1.3 of the converter 1 such that there is, at the output of the conversion system 100, a desired periodic output waveform with harmonics with a specific value, and to that end it comprises a control unit 3 communicated with the switches 1.3, such as a microcontroller, a microprocessor, an FPGA, or any device with computing capability.

The frequency of the output waveform depends on the application, i.e., on where said output waveform will be supplied, and it is predetermined. For example, if it is to be supplied to a European power grid, said frequency is 50 Hz.

In the context of the invention, the value of a harmonic must be interpreted as the percentage of the amplitude of the corresponding voltage harmonic with respect to the voltage of the DC bus 2.

Each harmonic $h_1$, $h_2$, ..., $h_n$ in turn comprises two components, a sine component and a cosine component (in some cases, one of them can be canceled). Hereinafter, for the sake of clarity, the proposed method is explained taking into consideration only one of said components, although the description would likewise apply to the other component if required.

The method takes as a reference an original periodic waveform with the same frequency as the desired output waveform, comprising harmonics $h_1$, $h_2$, ..., $h_n$ with a specific value, and obtained from the switching of switches 1.3 at switching angles $\alpha_1$, $\alpha_2$, ..., $\alpha_m$ determined in each of the periods (the same switching angles $\alpha_1$, $\alpha_2$, ..., $\alpha_m$ in each period). The original waveform can be obtained by means of any modulation which allows generating a chopped waveform (with switching angles), such as the PWM or SHE modulation types, for example. With these types of modulation, switching angles $\alpha_1$, $\alpha_2$, ..., $\alpha_m$ at which the switching of switches 1.3 of the converter 1 must be caused are obtained in each period. If the AC side 1.2 is connected to a multiphase system such as a three-phase grid, for example, switching angles $\alpha_1$, $\alpha_2$, ..., $\alpha_m$ are preferably obtained for one of the output phases, said switching angles $\alpha_1$, $\alpha_2$, ..., $\alpha_m$ being applied for all the phases.

To obtain the value of the harmonics $h_1$, $h_2$, ..., $h_n$ of the original waveform, by knowing the switching angles $\alpha_1$, $\alpha_2$, ..., $\alpha_m$, the following formulae obtained by applying Fourier transform to a function defined at constant segments can be applied:

$$a_h = -\frac{VBus/2}{h\,\pi} \sum_{j\,\epsilon\,edges\,1Q+2Q+3Q+4Q} \pm\,Sin\big(h\,\alpha_j\big)$$

$$b_h = +\frac{VBus/2}{h\,\pi} \sum_{j\,\epsilon\,edges\,1Q+2Q+3Q+4Q} \pm\,Cos\big(h\,\alpha_j\big)$$

wherein:

h:          harmonic;
$\alpha$:          switching angle;
$V_{BUS}$:     voltage of DC bus 2;
$a_h$:         cosine component of the corresponding harmonic h;
$b_h$:         sine component of the corresponding harmonic h;
j:          positive integer indexing the switching angles; and
$\pm$:          the "+" sign for switching angles on rising edges and the "-" sign for switching angles on falling edges.

The desired original waveform can therefore be generated following the desired criteria. Preferably, the original waveform can be that having the lowest possible values of the harmonics, at least of the first harmonics (without counting the first harmonic which corresponds with the fundamental component of the original waveform), such that an original waveform that is as sinusoidal as possible is obtained. Therefore, before implanting the conversion system 100 where the method will be implemented, different original waveforms can be simulated and that original waveform that is closest to the desired original waveform in each case can be selected. Subsequently, when the method is going to be implemented with the conversion system 100 already installed, at least in the first implementation thereof, the method starts with said selected original waveform as the starting point, as well as the value of its harmonics $h_1$, $h_2$, ..., $h_n$, and the switching angles $\alpha_1$, $\alpha_2$, ..., $\alpha_m$ from which it is generated.

The method takes as a reference the original waveform based on which a periodic output waveform (having the same frequency as the original waveform) is obtained with the desired values for the harmonics of the output waveform, as described in detail below.

The method comprises a first phase in which a sensitivity matrix J of the original waveform and its inverse are calculated. The sensitivity matrix J, also known as Jacobian matrix, is generated taking into account a plurality of harmonics $h_1$, $h_2$, ..., $h_n$ of the original waveform with respect to a plurality of switching angles $\alpha_1$, $\alpha_2$, ..., $\alpha_m$ associated with said original waveform. To generate the sensitivity matrix J, those harmonics $h_1$, $h_2$, ..., $h_n$ the value of which is to be controlled for the output waveform, and those switching angles $\alpha_1$, $\alpha_2$, ..., $\alpha_m$ to be controlled are selected, and the sensitivity of the values of the selected harmonics $h_1$, $h_2$, ..., $h_n$ with respect to variations of the selected switching angles $\alpha_1$, $\alpha_2$, ..., $\alpha_m$ is represented in said sensitivity matrix J.

In particular, to calculate the sensitivity matrix J all the partial derivatives of said selected harmonics $h_1$, $h_2$, ..., $h_n$ with respect to said selected switching angles $\alpha_1$, $\alpha_2$, ..., $\alpha_m$ are calculated, as shown in the following equation:

$$J = \begin{bmatrix} \dfrac{\partial h1}{\partial \alpha 1} & \dfrac{\partial h1}{\partial \alpha 2} & \cdots & \dfrac{\partial h1}{\partial \alpha m} \\[2mm] \dfrac{\partial h2}{\partial \alpha 1} & \dfrac{\partial h2}{\partial \alpha 1} & \cdots & \dfrac{\partial h2}{\partial \alpha m} \\[2mm] \cdots & \cdots & \cdots & \cdots \\[2mm] \dfrac{\partial hn}{\partial \alpha 1} & \dfrac{\partial hn}{\partial \alpha 2} & \cdots & \dfrac{\partial hn}{\partial \alpha m} \end{bmatrix} \qquad (1)$$

where n and m are positive integers, and wherein: $\dfrac{\partial hn}{\partial \alpha m}$ : variation of the value of the harmonic with respect to a variation of the switching angle m.

A switching angle space is a vector space having as many dimensions as switching angles. Each point of said space corresponds with a specific relation between said switching angles, such that varying one switching angle is sufficient for varying the resulting point in said space. Each point in said vector space therefore represents one possible waveform. The switching angles $\alpha_1$, $\alpha_2$, ..., $\alpha_m$ associated with the original waveform therefore correspond with a specific point (point of origin) in the corresponding switching angle space.

Similarly, a harmonic space is a vector space having as many dimensions as harmonics. Each point of said space corresponds with a specific relation between said harmonics, such that varying one harmonic is sufficient for varying the resulting point in said space. Each point in said vector space therefore represents one possible harmonic spectrum. The harmonics $h_1$, $h_2$, ..., $h_n$ associated with the original waveform therefore correspond with a specific point (point of origin) in the corresponding harmonic space.

When it comes to controlling a converter 1, the closing and opening (switching) of the switches 1.3 comprised in said converter 1 can be controlled in order to try to obtain the desired output waveform. To that end, the switching angle space for said switches 1.3 is taken as a reference. Each point in the switching angle space has an associated point in the harmonic space, but variation of one of the switching angles does not involve variation of only one of the harmonics (of the value thereof), but rather affects all the harmonics. Furthermore, variation of a point in the switching angle space is not reproduced linearly in the harmonic space. However, the smaller the variation of a point in the switching angle space is, the more linear the change in the harmonic space can be considered, so a sensitivity matrix is calculated in the method taking this fact into account.

The partial derivatives of each of the values of the selected harmonics for the sensitivity matrix with respect to each of the selected switching angles are therefore calculated to see how much the value of each harmonic changes with a small change in each switching angle.

Taking the switching angles as a reference, if the sensitivity matrix is multiplied by a specific switching angle modification vector (the vector reflects an increase or change of the switching angles), a vector of the values of the harmonics is obtained (the vector reflects an increase or change of the values of the harmonics with respect to the considered switching angle variations). However, since the switching angles, i.e., the instants in which the switching of the corresponding switches 1.3 is caused, can be controlled, this equation is inverted in the method. To that end, the inverse of the sensitivity matrix is calculated, and the switching angle modification vector to be taken into account for being applied to the switches 1.3 can thereby be obtained for obtaining the desired value of the harmonics (which is reflected, as described in detail below, in the vector of the values of the harmonics), multiplying said inverse sensitivity matrix by the vector of the harmonics.

Since the original waveform, and therefore its switching angles $\alpha_1$, $\alpha_2$, ..., $\alpha_m$, have been taken as a reference, the switching angle modification vector obtained reflects the variation to be applied on said original switching angles $\alpha_1$, $\alpha_2$, ..., $\alpha_m$, with the resulting switching angles being considered the instants in which the switching of the switches 1.3 must be caused to obtain the required output waveform (the output waveform with harmonics of specific values). The control unit 3 is configured for applying said switching angles, i.e., for controlling the closing and opening of the switches depending on said switching angles.

Figure 2 depicts an example of a comparison between the original switching angles $\alpha_1$, $\alpha_2$, ..., $\alpha_m$ (continuous line) and the new switching angles to be applied (discontinuous line) during a quarter wave cycle, the direction of the respective change of each switching angle being shown with an arrow.

At least the following two limitations for applying the new angles are taken into account in the method:

- The distance between two contiguous switching angles must be large enough so as to allow the switches 1.3 to stably change their state from one switching angle to the next.
- The new switching angles must maintain the same order as the original switching angles $\alpha_1$, $\alpha_2$, ..., $\alpha_m$.

If the two conditions are not met, the new switching angles are not applied as had been calculated, but rather in the manner that is as similar as possible, but always such that the two mentioned conditions are met.

The vector of the values of the harmonics is calculated as the difference between the values of the respective harmonics $h_1$, $h_2$, ..., $h_n$ of the original waveform being considered for the sensitivity matrix calculated in the first phase, and the (desired) setpoint values for said harmonics. This value is referred to as a vector of harmonic error in the context of the invention because it represents the difference between the desired values for the harmonics (the setpoint values) and the values the harmonics would have if the switching angles are not modified (in the case of using the switching angles $\alpha_1$, $\alpha_2$, ..., $\alpha_m$ associated with the original waveform). Therefore, the harmonics required to be compensated and the value of said harmonics are considered at all times, where the proposed method can be implemented at all times, cyclically, and in real time to meet the harmonic requirements for the output waveform at all times.

The switching angle modification vector is obtained by multiplying the vector of harmonic error thus obtained with the calculated inverse sensitivity matrix, as described above and as depicted in the following equation:

$$\begin{bmatrix} \partial\alpha1 \\ \partial\alpha2 \\ .... \\ \partial\alpha m \end{bmatrix} = J^{-1} * \begin{bmatrix} \partial h1 \\ \partial h2 \\ .... \\ \partial hn \end{bmatrix} \qquad (2)$$

wherein:

$$\begin{bmatrix} \partial\alpha1 \\ \partial\alpha2 \\ .... \\ \partial\alpha m \end{bmatrix}$$ : switching angle modification vector, and

$$\begin{bmatrix} \partial h1 \\ \partial h2 \\ .... \\ \partial hn \end{bmatrix}$$ : vector of harmonic error.

In that sense, the switching angles to be applied on the switches 1.3 are being calculated at all times, depending on the requirements of each moment, not being limited therefore to obtaining the same output waveform comprising harmonics of pre-established values every time.

The number of switching angles $\alpha_1$, $\alpha_2$, ..., $\alpha_m$ associated with the original waveform being considered for calculating the sensitivity matrix J of the first phase defines the number of degrees of freedom in the proposed method, where it is thereby possible to try to obtain the setpoint values of as many harmonics as the number of selected switching angles $\alpha_1$, $\alpha_2$, ..., $\alpha_m$ (as the available degrees of freedom). Therefore, in some embodiments, the number of harmonics $h_1$, $h_2$, ..., $h_n$ of the original waveform being considered for calculating the sensitivity matrix J is equal to the number of

switching angles $\alpha_1$, $\alpha_2$, ..., $\alpha_m$ associated with the original waveform being considered for calculating said sensitivity matrix J.

In a preferred embodiment, the first phase of the method is implemented only when initiating or re-initiating the conversion system 100 or before starting up said conversion system 100, whereas the second phase of the method is implemented cyclically in a continuous manner. In this case, furthermore, the sensitivity matrix J and its inverse can be previously calculated (offline, for example), and the values thereof can be, for example, stored in the conversion system 100 itself, and the same original waveform can always be taken as a reference, although there could also be a plurality of original waveforms, each original waveform associated with a specific modulation index or with a specific range of modulation indices, and that original waveform (and its sensitivity matrix and inverse sensitivity matrix) associated with the required modulation index for the output waveform is taken as a reference in the second phase. The modulation index can be received as a setpoint, together with the setpoint for the values of the harmonics or independent of said setpoint. The first harmonic is the fundamental component of the output waveform, so the value being considered for said first harmonic can be considered by way of a modulation index.

In the preferred embodiment, the calculations of the first phase are performed with a control unit other than control unit 4, said control unit being an external one even with respect to the conversion system 100, and the results are stored in a memory of the control unit 3. In other embodiments, the calculations can be performed in the control unit 3 itself or in another control unit comprised in the conversion system 100, and/or the results of the calculations can be stored in a memory, which is an external one with respect to the control unit 3.

In other embodiments, unlike in the preferred embodiment, not only is the second phase implemented cyclically in a continuous manner, rather the first phase is also implemented cyclically in a continuous manner. Therefore, first the first phase and then the second phase are implemented in each implementation cycle, with a new implementation cycle being initiated as soon as the preceding one ends. In these cases, the original waveform taken as a reference in an implementation cycle is preferably the output waveform obtained in a preceding implementation cycle.

The calculations of the second phase are preferably performed in the control unit 3, although they may be performed in another different control unit comprised in the conversion system 100.

Each row of the sensitivity matrix J represents information relating to (the variation of) a specific harmonic $h_1$, $h_2$, ..., $h_n$, and each column of said sensitivity matrix J represents information relating to (the variation of) a specific switching angle $\alpha_1$, $\alpha_2$, ..., $\alpha_m$.

In the preferred embodiment, the total number of switching angles $\alpha_1$, $\alpha_2$, ..., $\alpha_m$ being considered in the sensitivity matrix J is equal to the number of harmonics $h_1$, $h_2$, ..., $h_n$ being considered in said sensitivity matrix J, with said sensitivity matrix J being a square matrix.

The required output waveform may comprise different configurations, such as a four-quadrant symmetry, a half-wave symmetry, an odd-wave symmetry, and without any symmetry. The selection of the switching angles for the sensitivity matrix depends on the required configuration. In that sense:

- For the case of a four-quadrant symmetry, the sensitivity matrix is calculated taking into account the switching angles $\alpha_1$, $\alpha_2$, ..., $\alpha_m$ associated with the first quadrant of the original waveform, the new switching angles obtained in the second phase being applied for obtaining each of the four quadrants of the output waveform.

- For the case of a half-wave symmetry, the sensitivity matrix is calculated taking into account the switching angles $\alpha_1$, $\alpha_2$, ..., $\alpha_m$ associated with the first quadrant and the second quadrant of the original waveform, the new switching angles obtained in the second phase corresponding to the first quadrant being applied both for obtaining said first quadrant and for obtaining the third quadrant of the output waveform, and the new switching angles obtained in the second phase corresponding to the second quadrant being applied both for obtaining said second quadrant and for obtaining the fourth quadrant of the output waveform.

- For the case of an odd-wave symmetry, the sensitivity matrix is calculated taking into account the switching angles $\alpha_1$, $\alpha_2$, ..., $\alpha_m$ associated with the first quadrant and the second quadrant of the original waveform, the new switching angles obtained in the second phase corresponding to the first quadrant being applied both for said first quadrant and for the fourth quadrant of the output waveform, and the new switching angles obtained in the second phase corresponding to the second quadrant being applied both for obtaining said second quadrant and for obtaining the third quadrant of the output waveform.

- For the case of not having any symmetry, the sensitivity matrix is calculated taking into account the switching angles $\alpha_1$, $\alpha_2$, ..., $\alpha_m$ associated with the four quadrants of the original waveform.

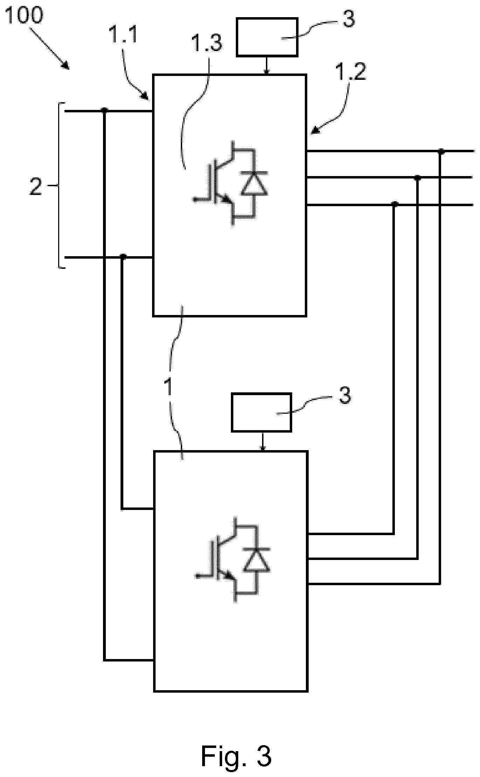

In other embodiments, the method is suitable for being implemented in an electric power conversion system 100 comprising a plurality of converters 1 connected in parallel, each with a plurality of controllable switches 1.3. Each converter 4 may comprise an associated control unit 3, like the one shown in Figure 3, or the conversion system 100 may comprise a single control unit for all the converters 1.

In this case, the sensitivity matrix J can represent all the converters 1, and for that reason the switching angles $\alpha_1, \alpha_2, ..., \alpha_m$ being considered in said sensitivity matrix J are the switching angles $\alpha_1, \alpha_2, ..., \alpha_m$ specific to each converter 1. The sensitivity matrix J preferably comprises a specific number of switching angles $\alpha_1, \alpha_2, ..., \alpha_m$ of each converter 1, said number being the same for all the converters 1.

**Claims**

1. Modulation method for an electric power conversion system, comprising at least one electronic power converter (1) with a plurality of controllable switches (1.3), **characterized in that,** with the method, taking as a reference an original periodic waveform comprising harmonics ($h_1, h_2, ..., h_n$) with specific values and obtained from the switching of switches (1.3) at specific switching angles ($\alpha_1, \alpha_2, ..., \alpha_m$) for each period of said original waveform, a periodic output waveform with harmonics with required values is obtained, said method comprising a first phase in which a sensitivity matrix (J) representing changes in the values of a plurality of selected harmonics ($h_1, h_2, ..., h_n$) of the original waveform with respect to changes of a plurality of selected switching angles ($\alpha_1, \alpha_2, ..., \alpha_m$) associated with said original waveform is calculated, calculating to that end all the partial derivatives of said harmonics ($h_1, h_2, ..., h_n$) with respect to each of said switching angles ($\alpha_1, \alpha_2, ..., \alpha_m$), and the inverse of said sensitivity matrix (J) is calculated, and a second phase in which

   - the vector difference between the values corresponding to the selected harmonics ($h_1, h_2, ..., h_n$) for calculating the sensitivity matrix (J) in the first phase and setpoint values for said harmonics is calculated, a vector of harmonic error being obtained as a result,
   - the inverse sensitivity matrix calculated in the first phase is multiplied by the vector of harmonic error, an incremental vector for the switching angles being obtained as a result of said multiplication,
   - the corresponding increment of the incremental vector for the switching angles is added to the value of the selected switching angles ($\alpha_1, \alpha_2, ..., \alpha_m$) for the sensitivity matrix (J), new switching angles being obtained, and
   - the switching of the switches (1.3) of the converter (1) according to the new switching angles is caused, the required output waveform being obtained.

2. Method according to claim 1, wherein the number of harmonics ($h_1, h_2, ..., h_n$) of the original waveform being considered for calculating the sensitivity matrix (J) is equal to the number of switching angles ($\alpha_1, \alpha_2, ..., \alpha_m$) associated with the original waveform being considered for calculating said sensitivity matrix (J).

3. Method according to claim 1 or 2, wherein the first phase of the method is implemented only when initiating or re-initiating the conversion system (100), or before starting said conversion system (100), and the second phase of the method is implemented cyclically in a continuous manner.

4. Method according to claim 3, wherein for the first phase of the method a single original waveform is taken as a reference.

5. Method according to claim 3, wherein in the first phase the sensitivity matrix (J) and the inverse of said sensitivity matrix (J) are calculated for a plurality of original waveforms, each original waveform being associated with a specific modulation index or with a specific range of modulation indices of the output waveform, the desired modulation index for the output waveform being received in the second phase, and the sensitivity matrix (J) and its inverse corresponding to the original waveform associated with said modulation index being selected in said second phase, the inverse of said sensitivity matrix (J) being that used during the second phase.

6. Method according to claim 1 or 2, wherein the first phase and the second phase are implemented cyclically in a continuous manner, the second phase being implemented after the first phase in one and the same implementation cycle, and the original waveform taken as a reference in an implementation cycle being the output waveform obtained in a preceding implementation cycle.

7. Method according to any of claims 1 to 6, wherein to apply the new switching angles on the switches (1.3), the distance between two contiguous switching angles must be large enough so as to allow said switches (1.3) to stably change their state from one switching angle to the next and said new switching angles must maintain the same order as the original switching angles ($\alpha_1, \alpha_2, ..., \alpha_m$).

8. Method according to any of claims 1 to 7, wherein the total number of switching angles ($\alpha_1$, $\alpha_2$, ..., $\alpha_m$) being considered in the sensitivity matrix (J) is equal to the number of harmonics ($h_1$, $h_2$, ..., $h_n$) being considered in said sensitivity matrix (J), said sensitivity matrix (J) being a square matrix.

9. Method according to any of claims 1 to 8, wherein the desired output waveform comprises a four-quadrant symmetry, the sensitivity matrix (J) being calculated taking into account the switching angles ($\alpha_1$, $\alpha_2$, ..., $\alpha_m$) associated with the first quadrant of the original waveform and the new switching angles obtained in the second phase being applied for obtaining each of the four quadrants of the output waveform.

10. Method according to any of claims 1 to 8, wherein the desired output waveform comprises a half-wave symmetry, the sensitivity matrix (J) being calculated taking into account the switching angles ($\alpha_1$, $\alpha_2$, ..., $\alpha_m$) associated with the first quadrant and the second quadrant of the original waveform, the new switching angles obtained in the second phase corresponding to the first quadrant being applied both for obtaining said first quadrant and for obtaining the third quadrant of the output waveform, and the new switching angles obtained in the second phase corresponding to the second quadrant being applied both for obtaining said second quadrant and for obtaining the fourth quadrant of the output waveform.

11. Method according to any of claims 1 to 8, wherein the desired output waveform comprises an odd-wave symmetry, the sensitivity matrix (J) being calculated taking into account the switching angles ($\alpha_1$, $\alpha_2$, ..., $\alpha_m$) associated with the first quadrant and the second quadrant of the original waveform, the new switching angles obtained in the second phase corresponding to the first quadrant being applied both for said first quadrant and for the fourth quadrant of the output waveform, and the new switching angles obtained in the second phase corresponding to the second quadrant being applied both for obtaining said second quadrant and for obtaining the third quadrant of the output waveform.

12. Method according to any of claims 1 to 8, wherein the desired output waveform does not comprise any symmetry, the sensitivity matrix (J) being calculated taking into account the switching angles ($\alpha_1$, $\alpha_2$, ..., $\alpha_m$) associated with the four quadrants of the original waveform.

13. Method according to any of claims 1 to 12, which is suitable for an electric power conversion system comprising a plurality of electronic power converters (1) connected in parallel, each of them comprising a plurality of controllable switches (1.3), and the switching angles ($\alpha_1$, $\alpha_2$, ..., $\alpha_m$) being considered in the sensitivity matrix (J) being the switching angles ($\alpha_1$, $\alpha_2$, ..., $\alpha_m$) specific to each converter (1).

14. Method according to claim 13, wherein the sensitivity matrix (J) comprises a specific number of switching angles ($\alpha_1$, $\alpha_2$, ..., $\alpha_m$) of each converter (1), said number being the same for all the converters (1).

Fig. 1

Fig. 2

Fig. 3

Europäisches
Patentamt

European
Patent Office

Office européen
des brevets

## EUROPEAN SEARCH REPORT

Application Number

EP 18 38 2844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO HUI ET AL: "A Real-Time Selective Harmonic Elimination Based on a Transient-Free Inner Closed-Loop Control for Cascaded Multilevel Inverters", IEEE TRANSACTIONS ON POWER ELECTRONICS, INSTITUTE OF ELECTRICAL AND ELECTRONICS ENGINEERS, USA, vol. 31, no. 2, 1 February 2016 (2016-02-01), pages 1000-1014, XP011670447, ISSN: 0885-8993, DOI: 10.1109/TPEL.2015.2413898 [retrieved on 2015-09-29] * abstract * * figures 1, 4, 5, 8, 21 * * Section II.A * * Section IV.A * ----- | 1-14 | INV. H02M1/12 H02M7/539 ADD. H02M7/493 H02M7/483 |
| X | Siriroj Sirisukprasert: "OPTIMIZED HARMONIC STEPPED-WAVEFORM TECHNIQUE (OHSW)", , 15 September 1999 (1999-09-15), XP055592542, Retrieved from the Internet: URL:https://vtechworks.lib.vt.edu/bitstream/handle/10919/35333/Chapter3.pdf?sequence=6&isAllowed=y [retrieved on 2019-05-28] * figures 3.1, 3.2, 3.5 * * Section 3.2.3.1 * * pages 37, 45 * ----- -/-- | 1-14 | |

TECHNICAL FIELDS SEARCHED (IPC)

H02M

The present search report has been drawn up for all claims

| Place of search | Date of completion of the search | Examiner |
|---|---|---|
| The Hague | 29 May 2019 | Adami, Salah-Eddine |

Europäisches
Patentamt

European
Patent Office

Office européen
des brevets

# EUROPEAN SEARCH REPORT

Application Number

EP 18 38 2844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALBERT MARTIN RUBAN A ET AL: "Real time Harmonic Elimination PWM control for Voltage Source Inverters", 2012 INTERNATIONAL CONFERENCE ON ADVANCES IN ENGINEERING, SCIENCE AND MANAGEMENT (ICAESM 2012) : NAGAPATTINAM, TAMIL NADU, INDIA, 30 - 31 MARCH 2012, IEEE, PISCATAWAY, NJ, 30 March 2012 (2012-03-30), pages 479-484, XP032185521, ISBN: 978-1-4673-0213-5 * abstract * * figures 1, 2, 4 * * Sections III, IV * ----- | 1-14 | |

TECHNICAL FIELDS
SEARCHED      (IPC)

The present search report has been drawn up for all claims

| Place of search | Date of completion of the search | Examiner |
|---|---|---|
| The Hague | 29 May 2019 | Adami, Salah-Eddine |

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007242489 A1